(19) Europäisches Patentamt / European Patent Office / Office européen des brevets

(11) **EP 4 445 527 B1**

(12) **EUROPEAN PATENT SPECIFICATION**

(45) Date of publication and mention of the grant of the patent:
**01.07.2026 Bulletin 2026/27**

(21) Application number: **21836137.6**

(22) Date of filing: **11.12.2021**

(51) International Patent Classification (IPC):
*H04B 17/14* (2015.01)  *H04B 17/11* (2015.01)
*H04B 7/04* (2017.01)

(52) Cooperative Patent Classification (CPC):
**H04B 17/14; H04B 17/11**

(86) International application number:
**PCT/EP2021/085332**

(87) International publication number:
**WO 2023/104325 (15.06.2023 Gazette 2023/24)**

(54) **METHOD AND APPARATUS FOR CALIBRATING A WIRELESS COMMUNICATION DEVICE**

VERFAHREN UND VORRICHTUNG ZUR KALIBRIERUNG EINER DRAHTLOSEN KOMMUNIKATIONSVORRICHTUNG

PROCÉDÉ ET APPAREIL D'ÉTALONNAGE D'UN DISPOSITIF DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.10.2024 Bulletin 2024/42**

(73) Proprietor: **Telefonaktiebolaget LM Ericsson (publ)**
**164 83 Stockholm (SE)**

(72) Inventors:
• **VIEIRA, Joao**
 **245 63 HJÄRUP (SE)**
• **FRENGER, Pål**
 **582 27 LINKÖPING (SE)**
• **GÖRANSSON, Bo**
 **191 38 SOLLENTUNA (SE)**
• **REIAL, Andres**
 **234 40 LOMMA (SE)**
• **LARSSON, Erik G.**
 **586 63 LINKÖPING (SE)**

(74) Representative: **Ericsson Patent Development**
**Torshamnsgatan 21-23**
**164 80 Stockholm (SE)**

(56) References cited:
**WO-A1-2021/121538**  **WO-A1-2021/213658**
**WO-A1-98/47019**  **US-A1- 2018 048 492**

**Description**

Technical Field

Examples of the present disclosure relate to calibrating a wireless communication device.

Background

The project leading to this application has received funding from the European Union's Horizon 2020 research and innovation programme under grant agreement No 101013425.

Wireless standards, such as 5G New Radio (NR), may use spatial beamforming and therefore accommodate modes that support the operation of nodes equipped with many antennas. When the number of node antennas is large enough, say many tens or more, such systems are referred to as massive multiple-input multiple-output (MIMO).

One challenge of scaling MIMO systems massively is that explicit channel estimation becomes very challenging. This is because the training overhead typically scales linearly with the number of antennas or beam codebook size, and Channel State Information (CSI) feedback is also necessary. A beam codebook is a lookup table of pre-defined beamforming vectors. For a larger antenna array, a larger codebook is usually needed since the beams will be narrower, and more beams are needed to span a certain coverage range. An alternative approach, supported in NR, is to rely on channel reciprocity and use reverse link (e.g. uplink, UL) training signals to estimate forward link (e.g. downlink, DL) channels and compute beamforming parameters. This approach is suitable for time-division duplexing of uplink and downlink transmissions when the same carrier frequency is used in uplink and downlink. For fully digital devices, i.e. those having one transceiver chain per antenna, only one training signal per forward link stream is necessary and thus the training overhead is only proportional to the number of forward link streams, which is typically much smaller than the number of antennas or codebook size. This approach can be useful, such as in a multi-user (MU) MIMO context, where a fully digital many-antenna base station may use UL channel estimates to precode data streams to User Equipments (UEs) in the DL. However, although the propagation channel is considered to be reciprocal, the presence of analog front-end circuitry in uncalibrated UEs and the uncalibrated base station can make the baseband-to-baseband channel non-reciprocal, e.g. the uplink channel may have a different channel response to the downlink channel.

There exist different types of calibration procedures that restore some degree of reciprocity of a wireless channel. One approach is, for example, to perform bi-directional over-the-air (OTA) measurements between the UEs and the base station (BS). This way, an entire measurement set may be gathered at one node, and used to estimate UE and BS calibration coefficients. Another approach is to conduct the entire calibration procedure solely at the node to be calibrated (e.g., the gNB or UE), i.e. local calibration. Since only one part of the link is involved in the calibration procedure, this approach can only ensure a certain level of calibration but has the advantage of not involving the other side of the link the calibration process. Nevertheless, the degree of calibration obtained may be sufficient. This approach can be executed in two different ways:

> 1. By an internal calibration network, where a reference transceiver unit transmits and receives signals to and from all transceivers in the node (e.g. UE or BS) to be calibrated. The received signals are then post-processed to estimate calibration coefficients.
> 2. By over-the-air signaling between some or all pairs of antennas in the node. The point of this approach is to bypass the need of dedicated internal networks for calibration. The received signals are then post-processed to estimate calibration coefficients.

The second approach is described for example in J. Vieira et al, "Reciprocity calibration for massive MIMO: Proposal, modeling and validation," IEEE Trans. Wireless Commun., vol. 16, no. 5, pp. 3042-3056, May 2017.

Further, WO 2021/121538 A1 provides a method for determination of transceiver chain characteristics for a multi-antenna transceiver in the form of a beamforming calibration factor per transceiver chain.

Summary

Existing methods for calibration of a device may require consumption of high computing, time and/or frequency resources, particularly in cases where the device has a large number of antennas. Examples of this disclosure may provide methods and apparatus whereby the amount of resources used for calibration may be reduced, and/or the calibration accuracy may be improved, as compared to state of the art techniques.

One aspect of the present disclosure provides a method of calibrating a wireless communication device having a plurality of antennas. The method comprises transmitting a first calibration signal from at least one first antenna of the plurality of antennas in a first time-frequency resource, determining first measurements of the first calibration signal in the first time-frequency resource from at least one second antenna of the plurality of antennas, wherein the at least one second antenna includes at least one of the at least one first antenna, and determining calibration parameters for the wireless communication device based on the first measurements.

A further aspect of the present disclosure provides apparatus for calibrating a wireless communication device having a plurality of antennas. The apparatus comprises a processor and a memory. The memory contains instructions executable by the processor such that the apparatus is operable to transmit a first calibration signal from at least one first antenna of the plurality of antennas in a first time-frequency resource, determine first measurements of the first calibration signal in the first time-frequency resource from at least one second antenna of the plurality of antennas, wherein the at least one second antenna includes at least one of the at least one first antenna, and determine calibration parameters for the wireless communication device based on the first measurements.

An additional aspect of the present disclosure provides apparatus for calibrating a wireless communication device having a plurality of antennas. The apparatus is configured to transmit a first calibration signal from at least one first antenna of the plurality of antennas in a first time-frequency resource, determine first measurements of the first calibration signal in the first time-frequency resource from at least one second antenna of the plurality of antennas, wherein the at least one second antenna includes at least one of the at least one first antenna, and determine calibration parameters for the wireless communication device based on the first measurements.

Brief Description of the Drawings

For a better understanding of examples of the present disclosure, and to show more clearly how the examples may be carried into effect, reference will now be made, by way of example only, to the following drawings in which:

Figure 1 is a flow chart of an example of a method of calibrating a wireless communication device having a plurality of antennas;

Figure 2 shows an example of a wireless communication device;

Figure 3 is a flow chart of another example of a method of calibrating a wireless communication device having a plurality of antennas;

Figure 4 is a schematic of an example of an apparatus for calibrating a wireless communication device having a plurality of antennas;

Figure 5 is a schematic of an example of an apparatus for calibrating a wireless communication device having a plurality of antennas;

Figure 6 shows the results of the simulations of the example calibration procedures;

Figure 7 schematically illustrates a telecommunication network connected via an intermediate network to a host computer;

Figure 8 is a generalized block diagram of a host computer communicating via a base station with a user equipment over a partially wireless connection; and

Figures 9 to 12 are flowcharts illustrating methods implemented in a communication system including a host computer, a base station (or access point) and a user equipment.

Detailed Description

The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, Application Specific Integrated Circuits (ASICs), Programmable Logic Arrays (PLAs), etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

To understand how the second approach referred to above operates in detail, an example of the type of calibration coefficients that may be estimated will be described along with example estimation methods.

Assume a narrowband MIMO link with $M$ antennas at one end, and $K$ antennas on the other end. The end of the link with $M$ antennas is referred to as "side A," and the end of the link with $K$ antennas is referred to as "side B." Side A is a fully digital node and has the capability to process all $M$ signals, each signal from each antenna, in a joint fashion. Thus, side A can be for example a BS, an access point (e.g. of a distributed MIMO network) or a fully-digital UE with $M$ antennas. "Fully-digital" refers to the case of having one transceiver chain per antenna element. More generally, one transceiver chain may be defined per antenna port, where a port may provide a digital interface for an antenna subarray controlled in an analog manner. However, the methodology may also be suitable when the node performs analog or hybrid beamforming, i.e. its architecture has fewer transceivers than antenna elements.

Side B can be for example a $K$-antenna UE, or a $K$ single-antenna UE, or multiple UEs that collectively have a total of K antennas. In the massive MIMO regime, $M \gg K$. For illustrative but non-limiting purposes, for the following description, side A is referred to as a base station (BS), and side B is referred to as $K$ single-antenna UEs. However, the description may also apply to the other scenarios mentioned above.

A noiseless version of the $M \times K$ uplink (UL) channel narrowband radio channel $H_{UL}$, representing for example an OFDM subcarrier, PRB (physical resource block), or a PRB-group, is modelled as:

$$H_{UL} = R_{BS}\, H\, T_{UE}, \quad (1)$$

where $H$ consists of the propagation channel, and $T_{UE} = diag\{t_1^{UE}, \ldots, t_K^{UE}\}$ is a diagonal matrix that models the complex gains of the UEs transmitter chains, and $R_{BS} = diag\{r_1^{BS}, \ldots, r_M^{BS}\}$ is a diagonal matrix which models the complex gains of the BS receiver chains.

The associated DL channel is given by:

$$H_{DL} = R_{UE} H^T\, T_{BS}, \quad (2)$$

where $T_{BS} = diag\{t_1^{BS}, \ldots, t_M^{BS}\}$ and $R_{UE} = diag\{r_1^{UE}, \ldots, r_K^{UE}\}$ model the associated transceiver gains on the DL side. Within a T/F (time/frequency) coherence interval, the propagation channel can be assumed reciprocal. However, generally, the end-to-end radio channel may not be reciprocal because the gains (i.e. complex responses) of the transceiver circuitries may not be reciprocal. That is, for example, the complex response of a particular receiver chain within a transceiver may not be the same as the complex response of a particular transmitter chain within a transceiver (or, alternatively, for example, the receiver chain for an antenna may have a different complex response to the transmitter chain for the antenna).

It is assumed that the BS has knowledge of the following quantity:

$$C = diag\{c_1, \ldots, c_M\} = \alpha(T_{BS})^{-1} R_{BS}, \quad (3)$$

Here, $\alpha$ denotes a complex-valued unknown scaling term. In other words, for example, the BS should have knowledge of $(T_{BS})^{-1}R_{BS}$ up to an arbitrary non-zero complex-valued scaling factor. Via UL reference signals, the BS can estimate $H_{UL}$. If the BS is to perform zero forcing (ZF) transmission to UEs, it does so by the taking the Moore-Penrose inverse of $H_{UL}^T$, namely:

$$W = H_{UL}^*(H_{UL}^T\, H_{UL}^*)^{-1},$$

where $(\cdot)^*$ denotes element-wise complex conjugation. However, since $W$ was constructed via UL signals, it is not matched to the non-reciprocal DL channel $H_{DL}$. To solve this, at each antenna, the BS multiplies the precoded signal with an entry of $C$. More specifically, it multiplies the precoder signal at antenna m with $c_m$. The effective DL channel is then written as:

$$H_{DL_{eff}} = H_{DL} C\, W$$

$$= H_{DL} C\, H_{UL}^{*}\left(H_{UL}^{T}\, H_{UL}^{*}\right)^{-1}$$

$$= H_{DL} C\, R_{BS}^{*}\, H^{*}\, T_{UE}^{*}\left(T_{UE}\, H^{T}\, |R_{BS}|^{2}\, H^{*}\, T_{UE}^{*}\right)^{-1}$$

$$= H_{DL}\, \alpha(T_{BS})^{-1}\, |R_{BS}|^{2}\, H^{*}\, T_{UE}^{*}\left(T_{UE}\, H^{T}\, |R_{BS}|^{2}\, H^{*}\, T_{UE}^{*}\right)^{-1}$$

$$= H_{DL}\, \alpha(T_{BS})^{-1}\, H^{-T}\, (T_{UE})^{-1}$$

$$= \alpha\, R_{UE} H^{T}\, T_{BS}\, (T_{BS})^{-1}\, H^{-T}\, (T_{UE})^{-1}$$

$$= \alpha\, R_{UE}\, (T_{UE})^{-1},$$

which is a diagonal channel matrix with unknown diagonal entries. The unknown diagonal entries can be estimated using only one DL reference signal, beamformed in the DL towards all UEs, using the calibrated channels. Thus, $K$ UL reference signals plus one DL reference signal are sufficient to conduct all training needed for this reciprocity-based approach. This results in much less training overhead than performing explicit DL channel estimation of all pairs of antennas, or DL beam sweeping, which would consume about $M$ pilot resources and necessitate additional processing at the UEs.

In conclusion, knowledge of the ratios $C = \alpha\, diag\{\frac{r_1^{BS}}{t_1^{BS}}, \ldots, \frac{r_M^{BS}}{t_M^{BS}}\}$ may allow for example a ZF DL transmission with no inter-user interference over what is effectively a calibrated UL/DL channel, without resorting to explicit calibration networks or OTA calibration signals at the BS. Similar spatial multiplexing advantages are also present in the case of linear minimum mean squared error (MMSE) transmission, or maximum ratio transmission (MRT). They also exist for the case of UEs yielding multiple antennas, and/or multiple layers. The matrix $C$ can thus be seen as a calibration matrix, or may embody calibration parameters, and thus it may be desirable to estimate the calibration parameters, e.g. the diagonal elements of the matrix $C$.

The calibration parameters may in some examples be estimated as follows. The $M$ antennas of the BS are sounded one-by-one by transmitting a sounding signal (e.g. a reference signal) from each antenna and receiving on the other $M$ - 1 silent antennas (i.e. that are not transmitting). It follows that all the received signals between any pair of antennas can be compactly written in a matrix from as:

$$Y_{cal} = R_{BS}\, H_c\, T_{BS} \qquad (4)$$

where $H_c$ is a symmetric matrix that may model the reciprocal channels between any pair of transmitter and receiver chains and which may include, for example, antenna mutual coupling effects. More generally, the entry in row m and column $n$ of the matrix $H_c$, say $h_{m,n}$ where $h_{m,n} = h_{n,m}$, may model any baseband-to-baseband reciprocal channel component between radios (i.e. transceivers) n and m, and the associated transmitters and receivers gains $t_m$, $t_n$, $r_m$, and $r_n$ may model the remaining parts of the link between radios $n$ and m that are not reciprocal.

The diagonal entries of $H_c$, and consequently of $Y_{cal}$, are undefined for most practical cases, since according to state-of-the-art schemes, a transceiver cannot simultaneously transmit and receive at the same time. Note that the measurement matrix $Y_{cal}$ can be re-written as:

$$Y_{cal} = R_{BS}\, H_c\, T_{BS}$$

$$= R_{BS}\, H_c\, R_{BS} R_{BS}^{-1} T_{BS}$$

$$= \frac{1}{\alpha}\, R_{BS}\, H_c\, R_{BS} C$$

$$= P\, C, \qquad\qquad (5)$$

and the $P$ matrix is a symmetric matrix with undefined diagonal elements. Thus, the number of parameters in $P$ is $(M^2 - M)/2$. Also, the number of parameters in the diagonal matrix $C$ is M. Thus, since the measurement matrix $Y_{cal}$ has $M^2 - M$ observations, and $M^2 - M \geq \frac{M^2 - M}{2} + M$ for $M \geq 3$, the above mentioned measurement procedure provides a measurement set that is sufficient to identify or estimate the calibration matrix of interest $C$ up to an arbitrary non-zero complex-valued scaling factor.

The reciprocity calibration problem can in some examples be solved regardless of whether the entries of the mutual coupling matrix $\boldsymbol{H_c}$ are known or not. In the latter case, i.e. when these entries are deterministic but unknown, they may be treated as estimation parameters and may for example be inferred jointly with the calibration matrix $\boldsymbol{C}$ from measurements. In examples of the current disclosure, the entries of the mutual coupling matrix $\boldsymbol{H_c}$ are treated as deterministic but unknown.

In some examples, every transmitter in a device (e.g. a BS or UE) may not be sounded one-by-one (i.e. in an orthogonal fashion) as suggested above, and use a number of sounding resources (i.e. reference signals) equal to the number of transmit chains in order to calibrate the array. Instead, in some examples, measurements may be taken to estimate the calibration parameters where some of the transmitters are sounded simultaneously. That is, for example, multiple transmitters may simultaneously transmit a signal such as a reference signal, and the same reference signal (or time-frequency resource) may be used for sounding. In a particular example, in a 7-antenna element array, some transmitters can be activated simultaneously, and hence that the transmit matrix $\boldsymbol{T_{BS}}$ (4) may be replaced by the following example:

$$\boldsymbol{T}_{BS}^{\{2,2,1,1,1\}} = \begin{bmatrix} t_1 & 0 & 0 & 0 & 0 \\ t_2 & 0 & 0 & 0 & 0 \\ 0 & t_3 & 0 & 0 & 0 \\ 0 & t_4 & 0 & 0 & 0 \\ 0 & 0 & t_5 & 0 & 0 \\ 0 & 0 & 0 & t_6 & 0 \\ 0 & 0 & 0 & 0 & t_7 \end{bmatrix}. \tag{6}$$

To explain equation (6), at in a first time period (i.e. first column) the first and second transmitters sound the channel simultaneously, at the second time period (second column) the third and fourth transmitters sound the channel simultaneously, at the third time period the fifth transmitter sounds the channel, at the fourth time period the sixth transmitter sounds the channel, and at the fifth time period the seventh transmitter sounds the channel. However, in other examples, the different time periods may instead be different frequency resources instead of or as well as the different time periods. More generally, multiple transmitters (or antennas) may transmit a signal such as a reference signal in the same time-frequency resource.

The example matrix $\boldsymbol{T}_{BS}^{\{2,2,1,1,1\}}$ above may also be viewed as a compressed version of the original transmitter matrix $\boldsymbol{T_{BS}}$. Such compression can be expressed via a compression matrix $\boldsymbol{B}^{\{2,2,1,1,1\}}$ that satisfies $\boldsymbol{T}_{BS}^{\{2,2,1,1,1\}} = \boldsymbol{T_{BS}}\, \boldsymbol{B}^{\{2,2,1,1,1\}}$ and has the form:

$$\boldsymbol{B}_{BS}^{\{2,2,1,1,1\}} = \begin{bmatrix} 1 & 0 & 0 & 0 & 0 \\ 1 & 0 & 0 & 0 & 0 \\ 0 & 1 & 0 & 0 & 0 \\ 0 & 1 & 0 & 0 & 0 \\ 0 & 0 & 1 & 0 & 0 \\ 0 & 0 & 0 & 1 & 0 \\ 0 & 0 & 0 & 0 & 1 \end{bmatrix}. \tag{7}$$

The resulting measurement matrix, the analogous of $\boldsymbol{Y_{cal}}$ in (4), may be written as

$$\boldsymbol{Y}_{cal}^{\{2,2,1,1,1\}} = \begin{bmatrix} X & y_6 & y_{11} & y_{17} & y_{23} \\ X & y_7 & y_{12} & y_{18} & y_{24} \\ y_1 & X & y_{13} & y_{19} & y_{25} \\ y_2 & X & y_{14} & y_{20} & y_{26} \\ y_3 & y_8 & X & y_{21} & y_{27} \\ y_4 & y_9 & y_{15} & X & y_{28} \\ y_5 & y_{10} & y_{16} & y_{22} & X \end{bmatrix} \tag{8}$$

where "X" refers to undefined entries since, according to the previous methodology, the receiver of a transceiver (or associated with an antenna) is not activated at an instance when its associated transmitter is transmitting a reference signal.

Re-writing the resulting system model in the same style as in eq. (5) obtains:

$$Y_{cal}^{\{2,2,1,1,1\}} = P^{\{2,2,1,1,1\}} C^{\{2,2,1,1,1\}} + N, \quad (9)$$

where

$$P^{\{2,2,1,1,1\}} = \begin{bmatrix} X & X & p_1 & p_2 & p_3 & p_4 & p_5 \\ X & X & p_6 & p_7 & p_8 & p_9 & p_{10} \\ p_1 & p_6 & X & X & p_{11} & p_{12} & p_{13} \\ p_2 & p_7 & X & X & p_{14} & p_{15} & p_{16} \\ p_3 & p_8 & p_{11} & p_{14} & X & p_{17} & p_{18} \\ p_4 & p_9 & p_{12} & p_{15} & p_{17} & X & p_{19} \\ p_5 & p_{10} & p_{13} & p_{16} & p_{18} & p_{19} & X \end{bmatrix} \qquad C^{\{2,2,1,1,1\}} = \begin{bmatrix} c_1 & 0 & 0 & 0 & 0 \\ c_2 & 0 & 0 & 0 & 0 \\ 0 & c_3 & 0 & 0 & 0 \\ 0 & c_4 & 0 & 0 & 0 \\ 0 & 0 & c_5 & 0 & 0 \\ 0 & 0 & 0 & c_6 & 0 \\ 0 & 0 & 0 & 0 & c_7 \end{bmatrix} .$$

In this case, the amount of achieved overhead reduction in terms of estimating the non-zero entries of $C^{\{2,2,1,1,1\}}$ from the measurement set $Y_{cal}^{\{2,2,1,1,1\}}$ is $1 - \frac{N}{M} = 1 - \frac{5}{7} = \sim 29\%$ . Note that, compared to the full-overhead case, such methodology yields less processing gain since there are fewer measurements available to estimate the calibration coefficients (i.e. 19 measurements instead of 28 measurements as in eq. (8)). Thus, there is a tradeoff between performance and number of measurements or measurement overhead. However, in many practical scenarios when calibrating co-located arrays, the calibration SNR (and hence accuracy of the calibration parameters) may be high enough since the signals are typically exchanged between nearby antennas, (and thus their associated channels have relatively high gains. In such cases, the calibration SNR is not a limiting factor, and it may be desirable to reduce the calibration overhead as much as possible, especially when calibrating large antenna arrays.

Example techniques for calibration of a wireless communication device disclosed herein may for example enable calibration, especially of large antenna arrays, with less overhead and/or improved accuracy than state of the art techniques. In some examples, one or more of the antennas used during the calibration procedure may operate with their transmitter and receiver chains simultaneously activated during the calibration measurements. In other words, for example, at least one antenna is used for simultaneous transmission of a calibration signal and reception (e.g. measurements) during the calibration procedure. This may in some examples result in a larger number of measurements collected during calibration as compared to a technique where simultaneous transmit and receive during calibration is never performed. Some examples use isolation circuitry, such as for example a 3-port circulator, between the transmitter chain associated with an antenna, receiver chain associated with the antenna, and antenna port associated with the antenna.

Other examples of this disclosure, which may be used independently or in addition to the examples described in the previous paragraph, consider that, unlike previous calibration schemes where each antenna is used only once to transmit during a calibration procedure, at least one antenna may be used for transmission of a calibration signal more than once during the calibration procedure. Mathematically, this may be implemented for example by allowing more than one non-zero entry in at least one row of the compression matrix B referred to above in equation (7) above. Having the possibility for one (or more) transmitter(s) to be able to transmit more than once during a calibration procedure may for example allow for the possibility to transmit from a particular transmitter or antenna with a pattern across time (i.e. a time sequence). Each transmitter or antenna that transmits multiple times (e.g. in multiple time-frequency resources) may in some examples use a complex-valued pattern or sequence to transmit reference signals for calibration, meaning that each transmitter modulates the reference signals in terms of magnitude and phase, which is distinct from the real-valued pattern in some examples of equation (7) above. For example, examples of this disclosure contemplate complex-valued non-sparse settings for the compression matrix B. In some examples, the compression matrix B may be built as a Grassmannian frame under a line-packing criterium.

Advantages of examples of this disclosure may include one or more of the following. Compared to state-of-the-art calibration techniques, examples of this disclosure may achieve better calibration performance for the same calibration overhead, or may use lower overhead for the same calibration performance. In some cases, examples of this disclosure may achieve both of these advantages simultaneously. Examples of this disclosure may be particularly suitable to calibrate large antenna arrays, where the benefits of reducing the overhead for calibration are particularly desirable.

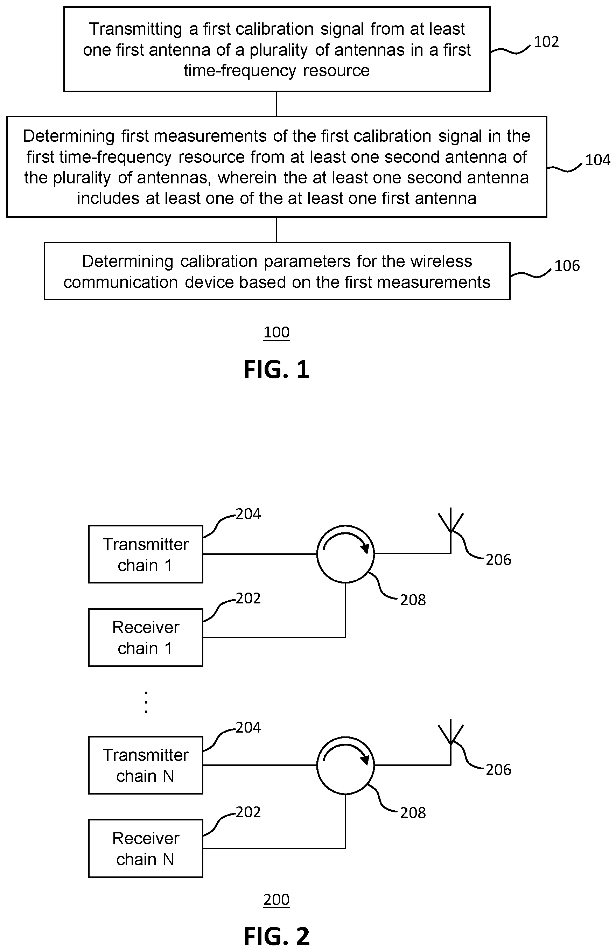

Figure 1 is a flow chart of an example of a method 100 of calibrating a wireless communication device having a plurality of antennas. The wireless communication device may be for example a base station (BS), access point (AP), User Equipment (UE) or any other type of communication device. The method 100 may be performed by such a device (i.e. a BS, AP, UE or other device). The method 100 comprises, in step 102, transmitting a first calibration signal from at least one first antenna of the plurality of antennas in a first time-frequency resource. The at least one first antenna may comprise for example one of the antennas, a subset of the antennas, or all of the antennas. The First time-frequency resource may comprise for example a particular time period and a particular frequency range, which may be for example the full bandwidth over which the device is capable of transmitting, or a part of it.

The method 100 also comprises, in step 104, determining (e.g. simultaneously with the transmitting in step 102) first measurements of the first calibration signal in the first time-frequency resource from at least one second antenna of the plurality of antennas, wherein the at least one second antenna includes at least one of the at least one first antenna. That is, for example, measurements are made of the first calibration signal received at the second antenna(s), and there is at least some overlap between the first and the second antenna(s). So, for example, the second antennas may include all of the first antennas, and may optionally include one or more additional antennas. Alternatively, for example, the first antennas may include all of the second antennas, and may optionally include one or more additional antennas. In another example, both the first and second sets of antennas may include antennas not in the other set. In yet another example, the first and second sets of antennas may be the same.

Step 106 of the method 100 comprises determining calibration parameters for the wireless communication device based on the first measurements. The calibration parameters may be for example the coefficients of the matrix **C** referred to above, and may be calculated using any of the example techniques described or referred to herein. The method may also comprise refraining from transmitting from the at least one second antenna other than the at least one first antenna in the first time-frequency resource. That is, for example, the antenna(s) in the second set other than the antenna(s) that are also in the first set may not be transmitting at the same time and/or in the same frequency as the first time-frequency resource.

In contrast to the methods described in prior art, where an antenna involved in the calibration process is used for either transmission or reception at a given instance, one or more antennas that are involved in the calibration process may act simultaneously as transmit antennas and receive antennas in some examples. That is, for example, a respective transceiver associated with each of the first antenna(s) may be used as both a transmitter and a receiver simultaneously. The transceiver may for example keep its receiver chain active while its transmitter chain is transmitting signals which pertain to calibration (e.g. the calibration signal). This also means that a transceiver configured to transmit and receive simultaneously may listen to a superposition of its own transmit signal, and the signals which are simultaneously being transmitted by other transmitters (if any).

In a system with $M$ transceivers, this feature may in some examples provide $T$ additional measurements for calibration, with $M \leq T \leq M^2$. In a particular illustrative example, the lower bound on $T$, i.e. $M$, is for orthogonal measurements setups as in equation (2) above when each of the $M$ measurements consists of a measurement instance (e.g. time-frequency resource) where only one transmitter is activated at a time. The upper bound for $T$, i.e. $M^2$, is for calibration setups where all transmitters are activated at all measurement instances. This would provide no measurements at all according state-of-the-art methods, where no antennas are used for simultaneous transmit and receive, according to examples of this disclosure would provide $M^2$ measurements. Therefore, examples of this disclosure may be used in calibration systems where no compression is used, e.g. as in equation (2), but it could also be used in calibration systems where compression is used, e.g. as in equation (7).

Mathematically, this feature may be realized in some examples by having a smaller number of non-defined entries in the mutual coupling matrix $H_c$ in equation (2) or in the matrix **P** in equation (9). For example, in a system where all antennas are used for simultaneous transmit and receive in all measurement time-frequency resources, the mutual coupling matrix $H_c$ will be a matrix with all its entries defined. This contrasts with the mutual coupling matrix associated with (2), where diagonal entries are undefined.

Such number of non-zero entries in the mutual coupling matrix $H_c$ may in some examples relate to the number of measurements collected during the calibration. For example, applying the current feature in the example described above with reference to equations (7)-(9) will provide $M \times N = 7 \times 5 = 35$ measurements for calibration, instead of 28. Thus, for a given calibration overhead, for example, allowing one or more antennas to act simultaneously as transmit and receive antennas will result in a larger number of measurements collected during the calibration, and thus may provide higher quality calibration due to processing gain compared to state-of-the-art calibration techniques. Alternatively, for example, a particular calibration performance may be achieved with less overhead compared to state-of-the-art techniques. Alternatively, in some examples, for a given number of measurements collected during the measurement procedure, larger arrays may be calibrated compared to state-of-the-art techniques.

In some examples, the method 100 comprises transmitting a respective first calibration signal simultaneously from each of a plurality of first antennas in the first time-frequency resource. Therefore, for example, different calibration signals may be transmitted from different first antennas. This may comprise for example transmitting the same first calibration signal from each of the plurality of first antennas weighted by a respective complex weighting factor for each first antenna.

In some examples, the method 100 may perform additional steps, as follows: transmitting a second calibration signal from at least one third antenna of the plurality of antennas in a second time-frequency resource, and determining (e.g. simultaneously with the transmitting) second measurements of the second calibration signal in the second time-frequency resource from at least one fourth antenna of the plurality of antennas. The at least one third antenna includes at least one of the at least one fourth antenna. Therefore, for example, the third and fourth antenna sets may at least partially overlap, similar to the first and second sets as indicated above. Determining calibration parameters for the wireless communication device in step 106 may therefore comprise for example determining the calibration parameters based on the first measurements and the second measurements. The second time-frequency resource may use a different time period than the first time-frequency resource, a different frequency or frequency range, or both (i.e. a different time and frequency). In some examples, the method 100 may comprise refraining from transmitting from the at least one fourth antenna other than the at least one third antenna in the first time-frequency resource. That is, for example, the antenna(s) in the fourth set other than the antenna(s) that are also in the third set may not be transmitting at the same time and/or in the same frequency as the second time-frequency resource.

The method 100 may in some examples comprise transmitting a respective second calibration signal simultaneously from each of a plurality of third antennas in the second time-frequency resource. Therefore, for example, different calibration signals may be transmitted from different third antennas. This may comprise for example transmitting the same second calibration signal from each of the plurality of third antennas weighted by a respective complex weighting factor for each third antenna.

In some examples of the method 100, the calibration parameters for the wireless communication device comprise, for each antenna, one or more values based on a ratio of a complex gain of transmitting apparatus associated with the antenna to a complex gain of receiving apparatus associated with the antenna, or based on a ratio of the complex gain of the receiving apparatus associated with the antenna to the complex gain of the transmitting apparatus associated with the antenna. Thus for example the calibration parameters may comprise coefficients similar to those in the equation

$$C = \alpha \, diag\{\frac{r_1^{BS}}{t_1^{BS}}, \ldots, \frac{r_M^{BS}}{t_M^{BS}}\}$$ referred to above.

In some examples, the calibration parameters for the wireless communication device comprise at least some elements of a calibration matrix $C$, where $C$ may be any of the examples of this matrix disclosed herein. Each of the at least some elements of the calibration matrix $C$ may then correspond to one or more of the calibration parameters associated with a respective one of the plurality of antennas.

Determining the calibration parameters for the wireless communication device based on the first measurements in step 106 of the method 100 may in some examples comprise determining the calibration parameters for the wireless communication device based on measurements including the first measurements, and wherein the measurements comprise $Y_{cal} = R_{BS} \, H_c \, T_{BS}$, where $H_c$ is a symmetric matrix that models reciprocal channels between each pair of antennas, $T_{BS}$ is a matrix that models complex gains of transmitter chains associated with the antennas, and $R_{BS}$ is a matrix that models complex gains of receiver chains associated with the antennas. $T_{BS}$ may for example be a diagonal matrix. Alternatively, for example, $T_{BS}$ may be a matrix with more rows than columns that comprises a diagonal matrix multiplied by a compression matrix $B$, wherein each diagonal element of the diagonal matrix models a complex gain of a transmitter chain associated with a respective one of the antennas.

The compression matrix $B$ as well as the other terms described in this paragraph may be those described above in some examples. At least one element of the compression matrix $B$ may have a complex value. In some examples, the compression matrix $B$ comprises a transpose of a Total m-Squared Correlation (TSC) Grassmann matrix. Non-zero elements of the compression matrix $B$ may in some examples have the same magnitude.

The method 100 may in some examples comprise determining further measurements in one or more further time-frequency resources, wherein the respective compression matrix used in each further time-frequency resource comprises the compression matrix $B$ with rows or columns permutated in a predetermined, random or pseudo-random sequence. The calibration parameters for the wireless communication device may then be determined based on the first measurements and the further measurements.

In some examples, the wireless communication device includes, for at least each second antenna that is a first antenna, respective isolation apparatus between an output of a transmitter chain associated with the antenna and an input of a receiver chain associated with the antenna. Figure 2 shows an example of a wireless communication device that illustrates an example of this arrangement. The wireless communication device 200 is a "fully digital" device, that is, it includes a respective receiver chain 202 and transmitter chain 204 for each of its N antennas 206. Each antenna 206 includes isolation apparatus 208 between the antenna 206 and the transmitter 204 and receiver 202 chains. In the example shown, each isolation apparatus 208 is a radio frequency (RF) circulator. For example, port 1 of the circulator is connected to the output of the associated transmitter chain 204, port 2 of the circulator is connected to the antenna 206, and port 3 of the circulator is connected to the input of the associated receiver chain 202. "Connected to" may mean directly connected or connected via one or more other components, such as for example one or more buffers, filters and/or other components (not shown). In alternative examples, the isolation apparatus may comprise an RF circulator or an RF switch.

In some examples, simultaneous transmit and receive (measurement) at a particular antenna for calibration purposes may not be a full-duplex feature. In full-duplex, in some examples, data detection is performed at a device by first removing the contribution from its own transmit signals from the measured signals. Thus, the transmit signals typically act as interference for the data detection process. This may not be the case for examples of calibration methods as disclosed herein. According to such methods, for example, the signal transmitted and received by a device, say node m, may undergo respective transmitter and receiver gains, namely $t_m$ and $r_m$, and therefore provide additional information for estimation of the calibration coefficients $\left\{ c_m = \frac{t_m}{r_m} \right\}_{m=1}^{M}$.

Another feature of examples of this disclosure is that, distinct from implementation of full-duplex, example methods may be implemented using the current transceiver architectures without the need for fundamental architectural changes. Instead, examples may be implemented with no modification to current hardware or with minimal changes, e.g. introducing isolation apparatus as shown for example in Figure 2.

In an example, the isolation apparatus may be a 3-port circulator that interconnects the transmit chain connected to port 1 of the circulator, the antenna connected to port 2, and the receive chain connected to port 3. A circulator ideally shorts (i.e. connects together with negligible impedance) 3 pairs of ports, namely the pairs 1-2, 2-3, and 3-1, and isolates the remaining combinations of port pairs (e.g., port 2-1). Note that the short between port 3 and 1 may be unnecessary in some examples.

In an ideal circulator, the transmit signal would not leak to the receive port. However, in practice, there may be some leakage between non-shorted port in some examples. This may be beneficial for examples of this disclosure since this may result in diagonal elements of the mutual coupling matrix $\boldsymbol{H}_c$ not being undefined entries, which in turn provides more measurement for calibration. In a particular example, this leakage may be around -25dB for mid-band circulators. The magnitude of the entries of the S-parameter matrix of a practical circulator may be of the form:

$$ S = \begin{bmatrix} -25\text{ dB} & -25\text{ dB} & \sim 0\text{dB} \\ \sim 0\text{dB} & -25\text{ dB} & -25\text{ dB} \\ -25\text{ dB} & \sim 0\text{dB} & -25\text{ dB} \end{bmatrix} $$

This may imply that, for example, at a given device, the component of the transmit signal which leaks directly to the receiver chain due to the non-ideal behavior of the circulator is around -25dB weaker than the transmit signal (e.g. the calibration signal) itself. This can be considered in some examples as the first component of the transmit signal which is received in its associated receiver chain.

In some examples, there may also exist a second component of the transmit signal that is received in its associated receiver chain, which occurs when the impedance of the antenna element connected to the transmitter and receiver chains (e.g. via isolation apparatus such as a circulator) is not completely matched to the impedance of its associated RF transmission line. Such mismatch typically presents a voltage standing wave ratio (VSWR) of about 1.4 or equivalently a return loss of 15dB. As a result, about -15dB of the transmit power is reflected at the antenna port towards the receiver chain via the short of the port pair 2-3.

In some examples, therefore, the calibration signal power received at a receiver chain from the associated transmitter chain may be a fraction of the transmitted power, that fraction being approximately -25dB ± 15dB ~ - 14.6dB weaker. In some examples, the inventors have determined that this is approximately the same as the power loss of signals received from neighboring antennas when they are used to transmit signals for calibration. In some example implementations, it has been determined that the mutual coupling between neighbor antenna elements is in the range of -15 to -25dB for half-wavelength distanced antenna-elements in mid-band arrays, though this may depend on factors such as for example as co- or cross-polarization orientation, antenna element format, substrate material, and/or other factors. As a result, since the power losses experienced for a calibration signal at a given receiver chain are similar regardless of whether the signals emanate from the associated transmitter chain (e.g. in the same transceiver) or from other neighboring antennas, simultaneous transmit and receive of a calibration signal at the same antenna may not cause receiver saturation problems.

The leakage and reflection components referred to above in some examples are two independent paths via which the transmitted calibration signal may appear in the receiver chain. The 10 dB difference between these two paths is merely an example, and the relative power of each path may be different in other implementations. With improper transceiver design, for example, it may be the case where both paths have similar gains and opposite phase, which will result in cancelation of the signals arriving from such paths. Therefore, in some example implementations according to this disclosure, a given transceiver chain (or the transmit and receive chains associated with the same antenna) may present a structure where cancelation of the two above mentioned signal component does not occur, for example by design and/or control of the amplitude and/or phase at least one such signal component.

In some examples, the wireless communication device may transmit a signal from the plurality of antennas, wherein the signal transmitted from each antenna is multiplied by one or more of the calibration parameters associated with the antenna. Thus for example channel reciprocity may be achieved.

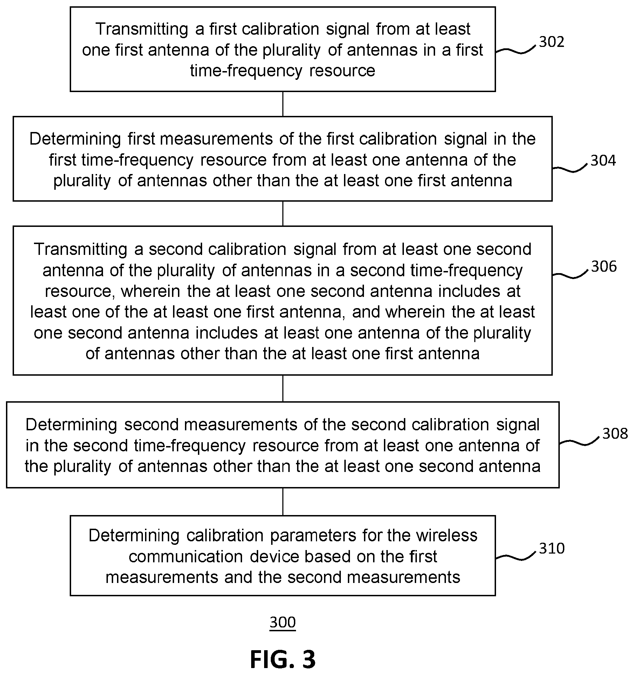

As indicated above, other examples of this disclosure, which may be used independently or in addition to the examples described above (e.g. examples of the method of Figure 1), consider that, unlike previous calibration schemes where each antenna is used only once to transmit during a calibration procedure, at least one antenna may be used for transmission of a calibration signal more than once during the calibration procedure. Figure 3 is a flow chart of an example of a method 300 of calibrating a wireless communication device (e.g. an AP, BS or UE) having a plurality of antennas, according to such examples. The method 300 may in some examples be performed by an AP, BS or UE, and/or may be performed by the device being calibrated.

The method 300 comprises, in step 302, transmitting a first calibration signal from at least one first antenna of the plurality of antennas in a first time-frequency resource. The first antennas may be for example one antenna or a subset of the antennas of the device. Step 304 of the method comprises determining first measurements of the first calibration signal in the first time-frequency resource from at least one antenna of the plurality of antennas other than the at least one first antenna.

Step 306 of the method 300 comprises transmitting a second calibration signal from at least one second antenna of the plurality of antennas in a second time-frequency resource. The at least one second antenna includes at least one of the at least one first antenna. That is, for example, there is at least some overlap between the first and second sets of antennas, and in some examples the first or second set may encompass all of the other set. As a result, at least one antenna is used to transmit calibration signals in both the first and second time-frequency resources. Also, the at least one second antenna includes at least one antenna of the plurality of antennas other than the at least one first antenna. Thus, for example, the set of antennas that comprises the second antennas includes at least one antenna that is not in the set of antennas that comprises the first antennas. The first and second time-frequency resources may be a different time period, different frequency, or different both time period and frequency. It should be noted that the first and second time-frequency resources may occur in any order in time and frequency. Thus, for example, the first and second time-frequency resources may occur at either order in time (or even at the same time in some examples where they have different frequency). The first and second calibration signals may be the same or may be different.

Step 308 of the method 300 comprises determining second measurements of the second calibration signal in the second time-frequency resource from at least one antenna of the plurality of antennas other than the at least one second antenna. Finally, step 310 comprises determining calibration parameters for the wireless communication device based on the first measurements and the second measurements. This may be done for example using any of the examples referred to or disclosed herein.

Thus, in some examples, at least one antenna (i.e. at least one of the at least one first antenna referred to in step 306 above) that may be used to transmit a calibration signal more than once during a calibration procedure. This contrasts with state of-the-art schemes where a given antenna is used only once during a calibration procedure. This feature can in some examples be represented mathematically by allowing more than one non-zero entry in at least on row of the compression matrix $\boldsymbol{B}$ in equation (7). For example, either of the example matrices below may be used:

$$\boldsymbol{B}'_{BS} = \begin{bmatrix} b_{11} & b_{12} & 0 & 0 & 0 \\ b_{21} & 0 & 0 & 0 & 0 \\ 0 & b_{31} & 0 & 0 & 0 \\ 0 & b_{42} & 0 & 0 & 0 \\ 0 & 0 & b_{53} & 0 & 0 \\ 0 & 0 & 0 & b_{64} & 0 \\ 0 & 0 & 0 & 0 & b_{75} \end{bmatrix} \quad \boldsymbol{B}''_{BS} = \begin{bmatrix} b_{11} & b_{12} & b_{13} & b_{14} & b_{15} \\ b_{21} & b_{22} & b_{23} & b_{24} & b_{25} \\ b_{31} & b_{32} & b_{33} & b_{34} & b_{35} \\ b_{41} & b_{42} & b_{43} & b_{44} & b_{45} \\ b_{51} & b_{52} & b_{53} & b_{54} & b_{55} \\ b_{61} & b_{62} & b_{63} & b_{64} & b_{65} \\ b_{71} & b_{72} & b_{73} & b_{74} & b_{75} \end{bmatrix}, \quad (10)$$

where $b_{mn}$ is, in general, a non-zero complex-valued entry. In particular examples, with $\boldsymbol{B}'_{BS}$, the transmitter associated with the first antenna is used to transmit a calibration signal in the first and second time-frequency resources (e.g. time periods) of the measurement round and the rest of the transmitters only once. With $\boldsymbol{B}''_{BS}$, each transmitter is used to transmit a calibration signal in every time-frequency resource (e.g. time period).

In some examples of the method 300, transmitting the first calibration signal from the at least one first antenna in the first time-frequency resource may comprise transmitting a respective complex first calibration signal from each of the at least one first antenna. Thus for example the calibration signal may be different depending on which antenna it is being transmitted from. Additionally or alternatively, in some examples, transmitting the second calibration signal from the at least one second antenna in the second time-frequency resource may comprise transmitting a respective complex second calibration signal from each of the at least one second antenna.

Therefore, for example, unlike calibration techniques where non-zero entries $\{b_{mn}\}$ of the compression matrix only take binary values in equation (7) above (e.g. either a transmitter associated with an antenna is either activated or not during a calibration procedure), examples of the present disclosure may allow for such entries being complex-valued and thus transmission of a complex calibration signal. Therefore, in some examples, a known magnitude-and-phase pattern may be applied to the calibration signal transmitted from a particular antenna during a calibration procedure, where the antenna is used in multiple time-frequency resources or time periods to transmit a calibration signal. For example, in the compression matrix $\boldsymbol{B}''_{BS}$ in equation (10) above, where all antennas are used to transmit a calibration signal in all time-frequency resources or time periods, the $m^{\text{th}}$ transmitter applies the N-length pattern $\boldsymbol{b}_m$, with N = 5, given by:

$$\boldsymbol{b}_m = [b_{m1}\ b_{m2}\ ...\ b_{mN}].$$

The feature in some examples of applying a magnitude-and-phase sequence to modulate the transmitted reference signals may provide additional degrees of freedom to design compression matrices. More specifically, for example, the degrees of freedom available from a combination of features from the methods 100 and 300 as described herein may allow for more general designs of the $M \times N$ codebook matrix B, namely designs in in $\mathbb{C}^{MxN}$, instead of for example sparse designs with binary non-zero entries.

In some examples, calibration performance may be a function on how distinct the different transmitter patterns are from each other. For example, if two transmitters apply the same pattern to the same calibration signal during the measurement round, may not be possible to distinguish their specific contributions from the measurement set, and thus one cannot estimate their individual calibration coefficients. Thus, examples of this disclosure include compression matrix formulations that result in distinct transmitter patterns, e.g. in terms of cross-correlation or orthogonality, and therefore result in good performance. In some examples, the compression matrix $\boldsymbol{B}$ is a tall matrix (i.e. more rows than columns), not square, and thus it cannot simply be determined according to orthogonal cover codes theory.

One example design principle for the encoding matrix $\boldsymbol{B}$ is such that the calibration signals sent by one transmitter (otherwise referred to herein as an antenna interchangeably) are well separated in a vector space compared to the signals sent by all other transmitters. An example mathematical formulation for this principle is one that accounts for the inner-products between all transmitter sequences. Therefore, in some examples, the sequences assigned to the transmitters are Grassmannian sequences, i.e. the encoding matrix $\boldsymbol{B}$ is defined as the transpose of a matrix with more columns than rows, typically known as a Total m-Squared Correlation (TSC)/Grassmann matrix. More specifically, for example if such a TSC/Grassmann matrix is built under a line-packing criterium, then $\boldsymbol{B}$ packs M unit-length vectors in a N-dimensional subspace. The unit-length rows of $\boldsymbol{B}$, namely $\left\{\boldsymbol{b}_j\right\}_{j=1}^{M}$, cannot all be mutually orthogonal, since there are more vectors than dimensions. Building $\boldsymbol{B}$ by minimizing the total m-squared correlation $\text{TSC} = \sum_{i,j}^{M} \left| \boldsymbol{b}_j \boldsymbol{b}_i^{H} \right|^{2m}$ sets up these $M$ unit-length vectors such that the sum of the m-squared cross-correlations between vectors are minimized (e.g. $m = 1$ minimizes the sum of squared Frobenious norms). If one adds a Grassmann constraint to the TSC minimization, then the cross-correlations between all possible pairs of M unit-length vectors must be equal.

Such formulations for $\boldsymbol{B}$ may for example result in a diagonally dominant Grammian matrix $BB^H$, which embeds the sought properties. A constraint may further be imposed that matrix $\boldsymbol{B}$ itself has constant-modulus entries, for all transmitters to transmit with the same energy at all instances. This may be beneficial from a hardware perspective. Any of the above Grassmann settings for $\boldsymbol{B}$ can in some examples be obtained with arbitrary precision using iterative procedures.

In some examples, the desired structure for suitable parameters for the encoding matrix **B** is such that it results in a diagonally dominant Grammian matrix $BB^H$. One exemplary method to generate such a matrix is based on approximations on orthogonal cover codes as follows:

1. Generate an orthogonal matrix of size $M$ by $M$, preferably with similar energy in all its entries. For example, a DFT matrix, or alternatively a square matrix where each row is a distinct cyclic shifted version of the same Zadoff-Chu sequence, may be suitable, though an identity matrix may not be suitable. This orthogonal matrix is referred to as **F.**
2. Extract a sub-matrix, denoted by **S**, from **F** with dimensions $M$ by $N$. For example,

$$\boldsymbol{F} = [\boldsymbol{S}\ \boldsymbol{S}'].$$

3. The matrix **S** may serve as the encoding matrix **B.**

In some examples, given encoding sequence may be assigned to different transmitters (or antennas) across different calibration procedures (or rounds) for the same device. For example, in a first calibration round, the encoding matrix **B** can be used. Then, in a subsequent calibration round, the encoding matrix used may be a matrix obtained by permutating at least some of the rows of **B.** The permutations could be performed either according to a pre-determined pattern or in a pseudo-random fashion. This may for example be referred to as sequence hopping across transmitters across calibration rounds.

Advantages of such approaches may include for example averaging of systematic errors associated with the used sequences across transmitters. For example, at mid-to-high calibration SNR, a bad cross-correlation instance between a pair of sequences can lead to poor calibration of the two transmitters which are associated with such pair of sequences. Thus, may be beneficial in some examples to spread the calibration errors across transmitters in time.

In some examples, the method 300 may comprise the following steps, for at least one further time-frequency resource. A further calibration signal may be transmitted from at least one further antenna of the plurality of antennas in the further time-frequency resource. The further time-frequency resource may for example have a different time period and/or frequency to the first and second time-frequency resource. In such examples, the at least one further antenna may differ from the first and second antennas, or the at least one further antenna may be the same or include the first antenna(s) and/or the second antenna(s). The method 300 may also include determining further measurements of the further calibration signal in the further time-frequency resource from at least one antenna of the plurality of antennas other than the at least one further antenna. Thus, determining the calibration parameters for the wireless communication device in step 310 may comprise determining the calibration parameters based on the further measurements as well as the first and second measurements. In some examples, transmitting the further calibration signal from the at least one further antenna in the further time-frequency resource comprises transmitting the same further calibration signal from each of the at least one further antenna weighted by a respective complex weighting factor.

As indicated above, the calibration parameters may in some examples be determined according to any of the examples referred to or disclosed herein. Therefore, in some examples, the calibration parameters for the wireless communication device may comprise, for each antenna, one or more values based on a ratio of a complex gain of transmitting apparatus associated with the antenna to a complex gain of receiving apparatus associated with the antenna, or based on a ratio of the complex gain of the receiving apparatus associated with the antenna to the complex gain of the transmitting apparatus associated with the antenna.

In some examples, the calibration parameters for the wireless communication device comprise at least some elements of a calibration matrix **C.** Each of the at least some elements of the calibration matrix **C** may in some examples correspond to one or more of the calibration parameters associated with a respective one of the plurality of antennas.

Determining the calibration parameters for the wireless communication device based on the first measurements and the second measurements in step 310 of the method 300 may in some examples comprise determining the calibration parameters for the wireless communication device based on measurements including the first measurements and the second measurements, and wherein the measurements comprise $Y_{cal} = R_{BS} H_c T_{BS}$, where $H_c$ is a symmetric matrix that models reciprocal channels between each pair of antennas, $T_{BS}$ is a matrix that models complex gains of transmitter chains associated with the antennas, and $R_{BS}$ is a matrix that models complex gains of receiver chains associated with the antennas. $T_{BS}$ may be for example a diagonal matrix. Alternatively, in some examples, $T_{BS}$ may be a matrix with more rows than columns (e.g. the tall matrix referred to above) that comprises a diagonal matrix multiplied by a compression matrix **B,** wherein each diagonal element of the diagonal matrix models a complex gain of a transmitter chain associated with a respective one of the antennas.

The compression matrix **B** may have one or more of the following properties in some examples. At least one element of the compression matrix **B** may have a complex value. The compression matrix **B** may comprise a transpose of a Total m-Squared Correlation (TSC) Grassmann matrix. Non-zero elements of the compression matrix **B** may have the same magnitude.

The method 300 may in some examples comprise determining further measurements in one or more further time-frequency resources, wherein the respective compression matrix used in each further time-frequency resource comprises the compression matrix **B** with rows or columns permutated in a predetermined, random or pseudo-random sequence, and the calibration parameters for the wireless communication device are determined based further on the further measurements. This permutation may be for example the permutation referred to above.

In some examples, as indicated above, the method 300 may be combined with the principle associated with the method 100 of Figure 1, e.g. at least one antenna may be used for simultaneous transmission of a calibration signal and reception/measurement during a calibration procedure. Thus, for example, determining the first measurements in step 304 may further comprise determining first measurements of the calibration signal from at least one of the at least one first antenna. Additionally or alternatively, for example, determining the second measurements in step 308 may further comprise determining second measurements of the calibration signal from at least one of the at least one second antenna. Thus, in some examples, the wireless communication device may include, for each of the at least one of the at least one first antenna, respective isolation apparatus between an output of a transmitter chain associated with the antenna and an input of a receiver chain associated with the antenna, and/or, for each of the at least one of the at least one second antenna, respective isolation apparatus between an output of a transmitter chain associated with the antenna and an input of a receiver chain associated with the antenna. Thus the arrangement may in some examples be that shown in Figure 2.

In some examples, the method 300 may comprise transmitting a signal from the plurality of antennas, wherein the signal transmitted from each antenna is multiplied by one or more of the calibration parameters associated with the antenna. Thus for example channel reciprocity may be achieved.

The following describes a particular example approach for processing the measurements obtained as disclosed herein for calibration purposes.

Note that the system model referred to above with reference to equation (9) can also be written as:

$$Y_{cal} = PCB + N, \tag{11}$$

where $B$ is a compression matrix, that may for example be designed in any manner as disclosed herein. Here, the entries of $N$ denote additive noise. Equation (11) may be expressed to allow for estimation of the calibration coefficients, which may be in the diagonal entries of $C$, as well as the nuisance parameter matrix $P$ (though $P$ is not of interest as it is desired to find the calibration coefficients in $C$).

Using the matrix identity $D = ABC \Leftrightarrow \text{vect}(D) = (C^T \otimes A)\text{vect}(B)$, equation (11) can be written as (ignoring the noise term $N$):

$$\text{vect}(Y_{cal}) = (B^T \otimes P)\text{vect}(C), \tag{12}$$

where $\otimes$ denotes the Kronecker product. However, the column vector $\text{vect}(C)$ has many non-zero entries. With $B = [b_1^T \ ... \ b_M^T]^T$ and $P = [p_1 \ ... \ p_M]$, equation (12) can be re-written as:

$$\text{vect}(Y_{cal}) = E \ c \tag{13}$$

where c is the vector with the desired calibration coefficients $c = [c_1 \ ... \ c_M]$ and:

$$E = [(b_1^T \otimes p_1) (b_2^T \otimes p_2) ... (b_M^T \otimes p_M)]. \tag{14}$$

The system model in equation (13) may also be written to allow for explicit estimation of the nuisance matrix $P$. By stacking all entries of the matrix $P$ in the column vector $p$ as:

$$p = [p_{1,1} \ p_{2,1} \ ... p_{M,1} \ p_{2,2} \ p_{3,2} \ ... p_{M,2} \ p_{3,3} \ p_{4,3} \ ... p_{M,3} \ ... p_{M,M}]^T, \tag{15}$$

then equation (13) may be written as:

$$\text{vect}(Y_{cal}^T) = F \ p, \tag{16}$$

where the structure of the observation matrix F can be inferred from equations (13), (14) and (15). Under a least squares formulation, which may equal a Maximum-Likelihood formulation when the additive noise is complex Gaussian distributed, one aims to find which p and c minimize squared Frobenius norm of the residuals, namely $\|\text{vect}(Y_{cal}) - E \ c\|^2$ or $\|\text{vect}(Y_{cal}^T) - F \ p\|^2$. However, there may be no clear closed-form solution for p and c since the cost function is not quadratic on the joint parameter space (composed of the elements of $p$ and c).

Instead, the optimization problem can be approached in some examples using alternating optimization techniques. That is, for example, by assuming one part of the parameter space to be fixed or known (e.g $E$ in equation (13)), a closed-form solution exists for the remaining part of the parameter space (e.g. $c$), and can be obtained via $\hat{c} = E^\dagger \text{vect}(Y_{cal})$, where $E^\dagger$ denotes the Moore-Penrose inverse of E. More generally, letting the estimates obtained at the n^th iteration of said alternating optimization procedure be given by $\hat{c}_{(n)}$ and $\hat{p}_{(n)}$, the estimates at iteration n + 1 may be obtained via the following two steps:

$$\hat{c}_{(n+1)} = (\hat{E}_{(n)})^\dagger \text{vect}(Y_{cal}) $$

and:

$$\hat{p}_{(n+1)} = (\hat{F}_{(n+1)})^\dagger \ \text{vect}(Y_{cal}^T).$$

Here, $\hat{E}_{(n)}$ may be obtained by constructing $E$ as in equation (14) using the estimates $\hat{p}_{(n)}$ instead of $p$. Similarly, $\hat{F}_{(n)}$ is obtained by constructing $F$ using the estimates $\hat{c}_{(n)}$ instead of $c$.

Note that each step of the alternating procedure is obtained in closed form, and thus each step always decreases or maintains its associated value in the cost function. That is:

$$\left\| \text{vect}(Y_{cal}) - \widehat{E}_{(n)} \, \hat{c}_{(n)} \right\|^2 \leq \left\| \text{vect}(Y_{cal}) - \widehat{E}_{(n+1)} \, \hat{c}_{(n+1)} \right\|^2$$

Thus in some examples the iterative alternating procedure is guaranteed to converge.

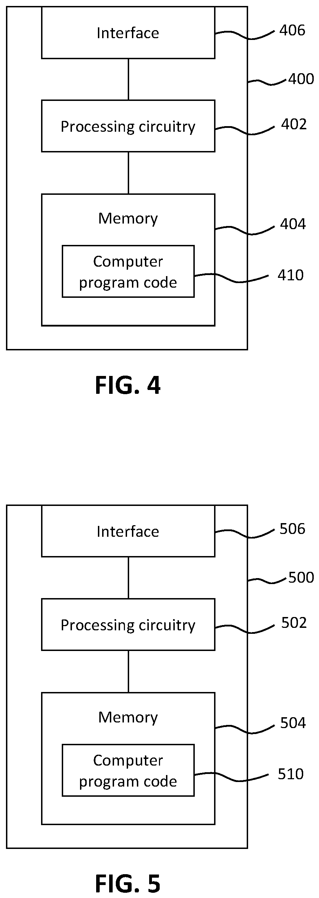

Figure 4 is a schematic of an example of an apparatus 400 for calibrating a wireless communication device having a plurality of antennas. The apparatus 400 comprises processing circuitry 402 (e.g., one or more processors) and a memory 404 in communication with the processing circuitry 402. The memory 404 contains instructions, such as computer program code 410, executable by the processing circuitry 402. The apparatus 400 also comprises an interface 406 in communication with the processing circuitry 402. Although the interface 406, processing circuitry 402 and memory 404 are shown connected in series, these may alternatively be interconnected in any other way, for example via a bus.

In one embodiment, the memory 404 contains instructions executable by the processing circuitry 402 such that the apparatus 400 is operable/configured to transmit a first calibration signal from at least one first antenna of the plurality of antennas in a first time-frequency resource, determine first measurements of the first calibration signal in the first time-frequency resource from at least one second antenna of the plurality of antennas, wherein the at least one second antenna includes at least one of the at least one first antenna, and determine calibration parameters for the wireless communication device based on the first measurements. In some examples, the apparatus 400 is operable/configured to carry out the method 100 described above with reference to Figure 1.

Figure 5 is a schematic of an example of an apparatus 500 for calibrating a wireless communication device having a plurality of antennas. The apparatus 500 comprises processing circuitry 502 (e.g., one or more processors) and a memory 504 in communication with the processing circuitry 502. The memory 504 contains instructions, such as computer program code 510, executable by the processing circuitry 502. The apparatus 500 also comprises an interface 506 in communication with the processing circuitry 502. Although the interface 506, processing circuitry 502 and memory 504 are shown connected in series, these may alternatively be interconnected in any other way, for example via a bus.

In one embodiment, the memory 504 contains instructions executable by the processing circuitry 502 such that the apparatus 500 is operable/configured to transmit a first calibration signal from at least one first antenna of the plurality of antennas in a first time-frequency resource, determine first measurements of the first calibration signal in the first time-frequency resource from at least one antenna of the plurality of antennas other than the at least one first antenna, transmit a second calibration signal from at least one second antenna of the plurality of antennas in a second time-frequency resource, wherein the at least one second antenna includes at least one of the at least one first antenna, and wherein the at least one second antenna includes at least one antenna of the plurality of antennas other than the at least one first antenna, determine second measurements of the second calibration signal in the second time-frequency resource from at least one antenna of the plurality of antennas other than the at least one second antenna, and determine calibration parameters for the wireless communication device based on the first measurements and the second measurements. In some examples, the apparatus 500 is operable/configured to carry out the method 300 described above with reference to Figure 3.

Examples of the present disclosure also include apparatus for calibrating a wireless communication device having a plurality of antennas. The apparatus comprises a transmitting module configured to transmit a first calibration signal from at least one first antenna of the plurality of antennas in a first time-frequency resource, a first determining module configured to determine first measurements of the first calibration signal in the first time-frequency resource from at least one second antenna of the plurality of antennas, wherein the at least one second antenna includes at least one of the at least one first antenna, and a second determining module configured to determine calibration parameters for the wireless communication device based on the first measurements.

Examples of the present disclosure also include apparatus for calibrating a wireless communication device having a plurality of antennas. The apparatus comprises a first transmitting module configured to transmit a first calibration signal from at least one first antenna of the plurality of antennas in a first time-frequency resource, a first determining module configured to determine first measurements of the first calibration signal in the first time-frequency resource from at least one antenna of the plurality of antennas other than the at least one first antenna, a second transmitting module configured to transmit a second calibration signal from at least one second antenna of the plurality of antennas in a second time-frequency resource, wherein the at least one second antenna includes at least one of the at least one first antenna, and wherein the at least one second antenna includes at least one antenna of the plurality of antennas other than the at least one first antenna, a second determining module configured to determine second measurements of the second calibration signal in the second time-frequency resource from at least one antenna of the plurality of antennas other than the at least one second antenna, and a third determining module configured to determine calibration parameters for the wireless communication device based on the first measurements and the second measurements.

Simulation results of example simulations implementing features of examples of this disclosure have provided results as follows. In the example simulations, the non-zero entries of the transmitter's matrix $T_{BS}$ and receiver's matrix $R_{BS}$ are defined as independent and identically distributed (i.i.d.) unit-length phasors with uniform phase distribution across $[0,2\pi]$. The non-diagonal entries of the mutual-coupling channel in the symmetric matrix $H_c$ are i.i.d. zero-mean unit-variance circularly symmetric complex-valued Gaussian variables, and the non-diagonal entries of the additive receiver noise $N$ are i.i.d. zero-mean circularly symmetric complex-valued Gaussian variables with variance $\sigma^2$. The calibration SNR is here defined as $\sigma^{-2}$. The Maximum-Likelihood alternating algorithm disclosed herein is used to estimate the calibration coefficients.

Since in some examples the application for the calibration weights is for reciprocity-based beamforming (and in some examples beamforming is only concerned with complex amplitude differences between antenna elements, and not with their absolute values), any scaled version of a calibration vector is equally good in terms of beamforming performance. That is, in some examples, the vector estimate $\hat{c}$ is as good as the vector $\alpha\hat{c}$, for $\alpha$ being any non-zero complex number. Thus, one calibration performance metric that takes this into account is the cosine of the principal angle between the subspace spanned by the true coefficient vector $c$ and the subspace spanned by the vector estimate $\hat{c}$. For example, when the estimate is perfect and the subspace of $c$ is perfectly aligned with the subspace of $\hat{c}$, the metric equals one. This metric can be written as:

$$Alignment = \frac{c^H\hat{c}}{\sqrt{c^Hc\hat{c}^H\hat{c}}} \ .$$

Simulations were performed to simulate the case of calibrating a small number of antennas and resources (N=5 and M=7), in order to verify the feasibility and gains of examples of this disclosure compared to state-of-the-art schemes. Simulations were performed for the same antenna array setup. However, examples of this disclosure may be suitable for larger antenna arrays, e.g. M>>7. The following simulations of example calibration procedures were performed:

a) A simulated example of the method 100 of Figure **1,** where all seven transmitters and receivers are simultaneously activated during five calibration measurements. Here, the Grassmann matrix disclosed above is used as the encoding matrix.
b) the example disclosed above, which uses the matrix $B^{\{2,2,1,1,1\}}$ given in equation (7).
c) a state-of-the-art case of using seven orthogonal measurements to calibrate the M=7 transceiver array (thus yielding maximum overhead), and which serves as an upper bound in performance and resource usage.

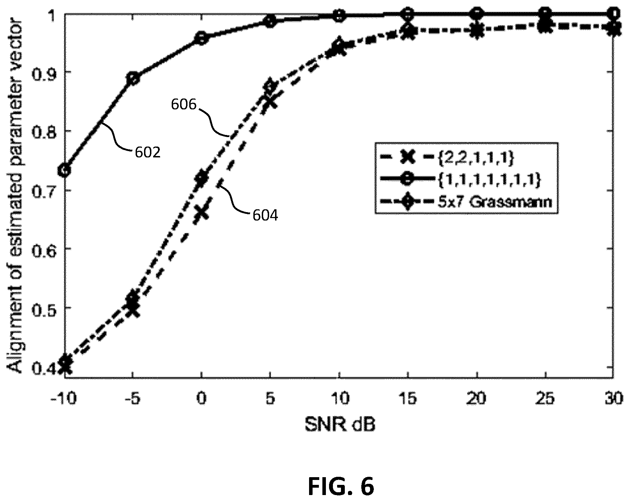

Figure 6 shows the results of the simulations of the example calibration procedures. This shows alignment between the estimated parameter vectors and the vector containing the true coefficients, all for the case of calibrating seven transceivers (or transmitter and receiver chains). The curve 602 corresponds to simulation (c) uses seven time-frequency resources for calibration (thus full overhead). The black curve 604 corresponds to simulation (b), and curve 606 corresponds to simulation (a), i.e. examples of this disclosure.

As expected, there is a performance loss in some examples associated with using a fewer number of measurements than transceivers. At high SNR, the curves 604 and 606 associated with N=5 seem to saturate at a value smaller than 1, but they do converge to 1 at a rate smaller than the full overhead curve 602. Therefore, at relatively high calibration SNR, the calibration quality may in some examples be sufficient and thus calibration SNR can in some examples effectively be traded for signaling overhead.

It can also be seen that, for the same number of measurements $N$ = 5, simulation (a) represented by curve 606 outperforms simulation (b) represented by curve 604. This is for example mainly due to the suitable structure of the Grassmann compression matrix discussed above, as opposing to the simpler compression matrix shown in equation (7). In the example shown, the SNR gains of simulation (a) are around 2dB compared to simulation (b) when calibrating a seven-antenna array in five resources. The simulation results may also be interpreted as that examples of this disclosure associated with simulation (a) can achieve the same calibration accuracy as those associated with simulation (b) but with less signaling overhead (e.g. fewer time-frequency resources).

Examples of this disclosure are also suitable for calibration of large antenna arrays in a device, where the benefits of reducing the overhead for calibration are particularly important. Unlike state-of-the-art methods where only one antenna transmits at a time during a calibration process, and where only neighbor antennas to the currently transmitting antenna listen (which requires transmit and receive scheduling), in some examples of this disclosure all antennas of a large array may transmit and receive simultaneously in all time-frequency resource(s). The transmitting antennas apply suitable time-sequences as previously described. In other examples, the antenna array may be divided into subsets of antennas (where possibly some antennas of a first subset overlap with some antennas of a second subset, some antennas of a second subset overlap with some antennas of a third subset, etc) and methods of calibrating a wireless communication device as disclosed herein may be utilized per subset of antennas.

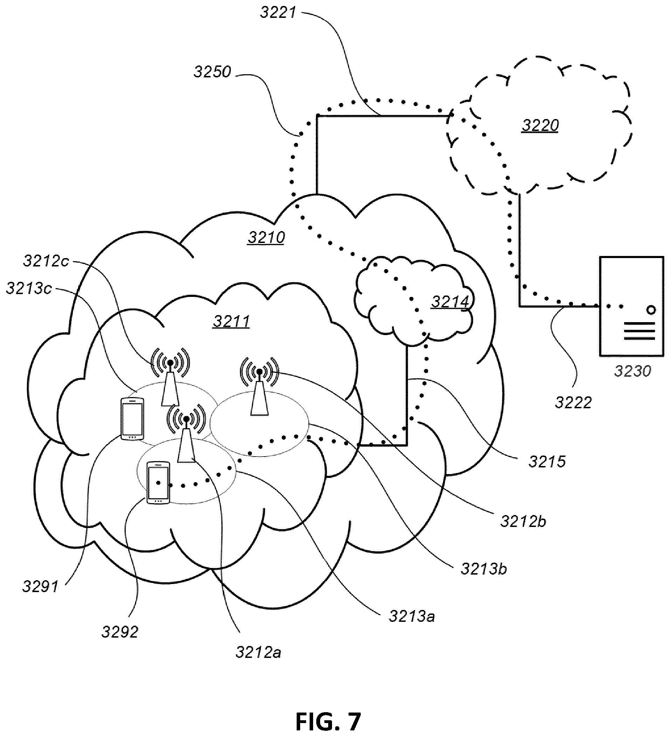

With reference to Figure 7, in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 7 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

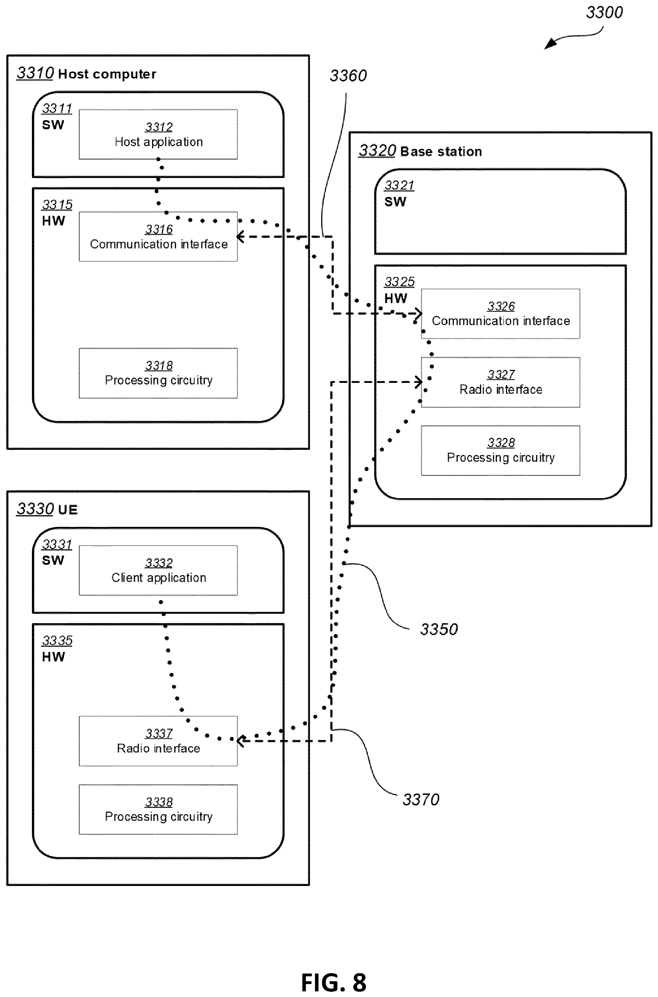

Example implementations, in accordance with an embodiment, of the UE, base station and host computer discussed in the preceding paragraphs will now be described with reference to Figure 8. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 8) served by the base station 3320. The communication interface 3326 may be configured to facilitate a connection 3360 to the host computer 3310. The connection 3360 may be direct or it may pass through a core network (not shown in Figure 8) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 8 may be identical to the host computer 3230, one of the base stations 3212a, 3212b, 3212c and one of the UEs 3291, 3292 of Figure 7, respectively. This is to say, the inner workings of these entities may be as shown in Figure 8 and independently, the surrounding network topology may be that of Figure 7.

In Figure 8, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

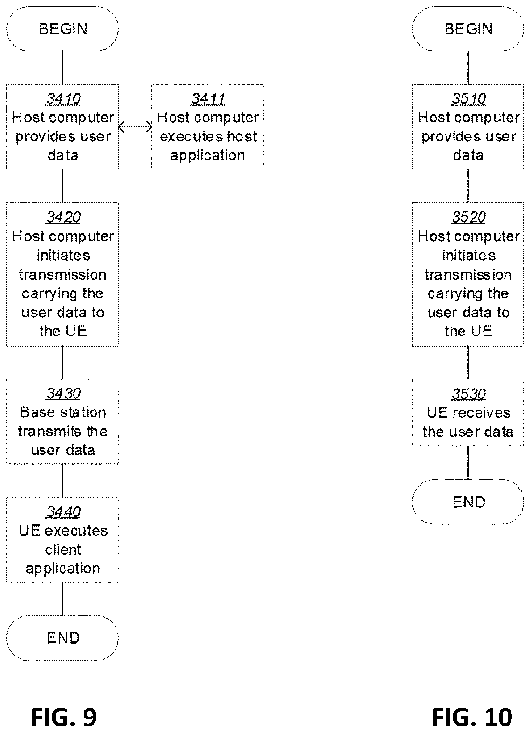

Figure 9 is a flowchart illustrating a method implemented in a communication system, in accordance with one embodiment. The communication system includes a host computer, a base station and a UE which may be those described with reference to Figures 7 and 8. For simplicity of the present disclosure, only drawing references to Figure 9 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

Figure 10 is a flowchart illustrating a method implemented in a communication system, in accordance with one embodiment. The communication system includes a host computer, a base station and a UE which may be those described with reference to Figures 7 and 8. For simplicity of the present disclosure, only drawing references to Figure 10 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

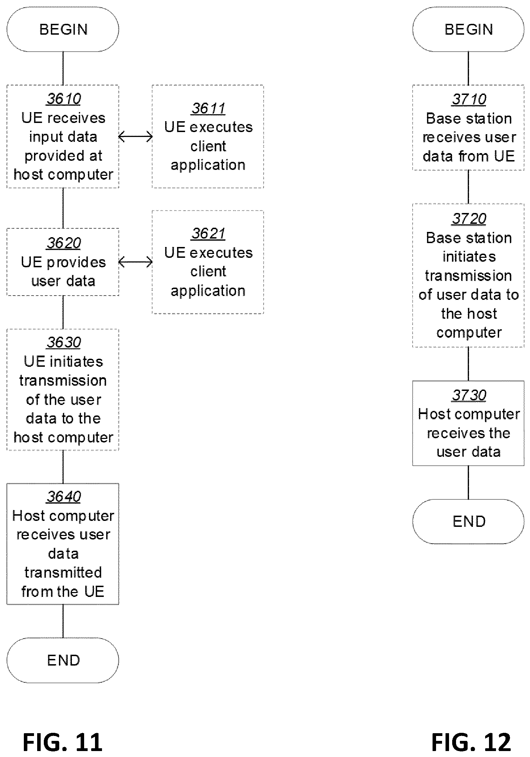

Figure 11 is a flowchart illustrating a method implemented in a communication system, in accordance with one embodiment. The communication system includes a host computer, a base station and a UE which may be those described with reference to Figures 7 and 8. For simplicity of the present disclosure, only drawing references to Figure 11 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

Figure 12 is a flowchart illustrating a method implemented in a communication system, in accordance with one embodiment. The communication system includes a host computer, a base station and a UE which may be those described with reference to Figures 7 and 8. For simplicity of the present disclosure, only drawing references to Figure 12 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

It should be noted that the above-mentioned examples illustrate rather than limit the invention, and that those skilled in the art will be able to design many alternative examples without departing from the scope of the appended statements. The word "comprising" does not exclude the presence of elements or steps other than those listed in a claim, "a" or "an" does not exclude a plurality, and a single processor or other unit may fulfil the functions of several units recited in the statements below. Where the terms, "first", "second" etc. are used they are to be understood merely as labels for the convenient identification of a particular feature. In particular, they are not to be interpreted as describing the first or the second feature of a plurality of such features (i.e., the first or second of such features to occur in time or space) unless explicitly stated otherwise. Steps in the methods disclosed herein may be carried out in any order unless expressly otherwise stated. Any reference signs in the statements shall not be construed so as to limit their scope.

## Claims

1.   A method of calibrating a wireless communication device having a plurality of antennas, the method comprising:

   transmitting (302) a first calibration signal from at least one first antenna of the plurality of antennas in a first time-frequency resource;
   determining (304) first measurements of the first calibration signal in the first time-frequency resource from at least one second antenna of the plurality of antennas, wherein the at least one second antenna includes at least one of the at least one first antenna;
   transmitting (306) a second calibration signal from at least one third antenna of the plurality of antennas in a second time-frequency resource;
   determining (308) second measurements of the second calibration signal in the second time-frequency resource from at least one fourth antenna of the plurality of antennas, wherein the at least one third antenna includes at least one of the at least one fourth antenna; and
   determining (310) calibration parameters for the wireless communication device based on the first measurements and the second measurements.

2.   The method of claim 1, comprising refraining from transmitting from the at least one fourth antenna other than the at least one third antenna in the first time-frequency resource.

3.   The method of claim 1 or 2, wherein the at least one fourth antenna comprises all of the at least one third antenna, or the at least one third antenna and the at least one fourth antenna are the same at least one antenna.

4.   The method of any of claims 1 to 3, comprising, in the second time-frequency resource, simultaneously transmitting the second calibration signal from the at least one third antenna and determining the second measurements from the at least one fourth antenna.

5.   The method of any of claims 1 to 4, wherein transmitting the second calibration signal from at least one third antenna of the plurality of antennas in the second time-frequency resource comprises transmitting a respective second calibration signal simultaneously from each of a plurality of third antennas in the second time-frequency resource.

6. The method of claim 5, wherein transmitting the respective second calibration signal simultaneously from each of the plurality of third antennas in the second time-frequency resource comprises transmitting the same second calibration signal from each of the plurality of third antennas weighted by a respective complex weighting factor.

7. The method of any of claims 1 to 6, comprising refraining from transmitting from the at least one second antenna other than the at least one first antenna in the first time-frequency resource.

8. The method of any of claims 1 to 7, wherein the at least one second antenna comprises all of the at least one first antenna, or the at least one first antenna and the at least one second antenna are the same at least one antenna.

9. The method of any of claims 1 to 8, comprising, in the first time-frequency resource, simultaneously transmitting the first calibration signal from the at least one first antenna and determining the first measurements from the at least one second antenna.

10. The method of any of claims 1 to 9, wherein transmitting the first calibration signal from at least one first antenna of the plurality of antennas in the first time-frequency resource comprises transmitting a respective first calibration signal simultaneously from each of a plurality of first antennas in the first time-frequency resource.

11. The method of claim 10, wherein transmitting the respective first calibration signal simultaneously from each of the plurality of first antennas in the first time-frequency resource comprises transmitting the same first calibration signal weighted by a respective complex weighting factor from each of the plurality of first antennas.

12. The method of any of claims 1 to 11, wherein the calibration parameters for the wireless communication device comprise, for each antenna, one or more values based on a ratio of a complex gain of transmitting apparatus associated with the antenna to a complex gain of receiving apparatus associated with the antenna, or based on a ratio of the complex gain of the receiving apparatus associated with the antenna to the complex gain of the transmitting apparatus associated with the antenna.

13. The method of any of claims 1 to 12, wherein the calibration parameters for the wireless communication device comprise at least some elements of a calibration matrix C.

14. A computer program comprising instructions which, when executed on at least one processor, cause the at least one processor to carry out a method according to any of claims 1 to 13.

15. Apparatus for calibrating a wireless communication device having a plurality of antennas, the apparatus comprising a processor and a memory, the memory containing instructions executable by the processor such that the apparatus is operable to:

transmit a first calibration signal from at least one first antenna of the plurality of antennas in a first time-frequency resource;
determine first measurements of the first calibration signal in the first time-frequency resource from at least one second antenna of the plurality of antennas, wherein the at least one second antenna includes at least one of the at least one first antenna;
transmit a second calibration signal from at least one third antenna of the plurality of antennas in a second time-frequency resource;
determine second measurements of the second calibration signal in the second time-frequency resource from at least one fourth antenna of the plurality of antennas, wherein the at least one third antenna includes at least one of the at least one fourth antenna;
determine calibration parameters for the wireless communication device based on the first measurements and the second measurements.

**Patentansprüche**

1. Verfahren zum Kalibrieren einer Drahtloskommunikationsvorrichtung, die eine Vielzahl von Antennen aufweist, das Verfahren umfassend:

Übertragen (302) eines ersten Kalibrierungssignals von mindestens einer ersten Antenne der Vielzahl von Antennen in einer ersten Zeit-Frequenz-Ressource;

Bestimmen (304) von ersten Messungen des ersten Kalibrierungssignals in der ersten Zeit-Frequenz-Ressource von mindestens einer zweiten Antenne der Vielzahl von Antennen, wobei die mindestens eine zweite Antenne mindestens eine der mindestens einen ersten Antenne einschließt;

Übertragen (306) eines zweiten Kalibrierungssignals von mindestens einer dritten Antenne der Vielzahl von Antennen in einer zweiten Zeit-Frequenz-Ressource;

Bestimmen (308) von zweiten Messungen des zweiten Kalibrierungssignals in der zweiten Zeit-Frequenz-Ressource von mindestens einer vierten Antenne der Vielzahl von Antennen, wobei die mindestens eine dritte Antenne mindestens eine der mindestens einen vierten Antenne einschließt; und

Bestimmen (310) von Kalibrierungsparametern für die Drahtloskommunikationsvorrichtung basierend auf den ersten Messungen und den zweiten Messungen.

2. Verfahren nach Anspruch 1, umfassend ein Unterlassen des Übertragens von der mindestens einen vierten Antenne außer der mindestens einen dritten Antenne in der ersten Zeit-Frequenz-Ressource.

3. Verfahren nach Anspruch 1 oder 2, wobei die mindestens eine vierte Antenne alle der mindestens einen dritten Antenne umfasst oder die mindestens eine dritte Antenne und die mindestens eine vierte Antenne dieselbe mindestens eine Antenne sind.

4. Verfahren nach einem der Ansprüche 1 bis 3, umfassend, in der zweiten Zeit-Frequenz-Ressource, das gleichzeitige Übertragen des zweiten Kalibrierungssignals von der mindestens einen dritten Antenne und das Bestimmen der zweiten Messungen von der mindestens einen vierten Antenne.

5. Verfahren nach einem der Ansprüche 1 bis 4, wobei das Übertragen des zweiten Kalibrierungssignals von mindestens einer dritten Antenne der Vielzahl von Antennen in der zweiten Zeit-Frequenz-Ressource das gleichzeitige Übertragen eines jeweiligen zweiten Kalibrierungssignals von jeder einer Vielzahl von dritten Antennen in der zweiten Zeit-Frequenz-Ressource umfasst.

6. Verfahren nach Anspruch 5, wobei das gleichzeitige Übertragen des jeweiligen zweiten Kalibrierungssignals von jeder der Vielzahl von dritten Antennen in der zweiten Zeit-Frequenz-Ressource das Übertragen desselben zweiten Kalibrierungssignals von jeder der Vielzahl von dritten Antennen gewichtet mit einem jeweiligen komplexen Gewichtungsfaktor umfasst.

7. Verfahren nach einem der Ansprüche 1 bis 6, umfassend das Unterlassen des Übertragens von der mindestens einen zweiten Antenne außer der mindestens einen ersten Antenne in der ersten Zeit-Frequenz-Ressource.

8. Verfahren nach einem der Ansprüche 1 bis 7, wobei die mindestens eine zweite Antenne alle der mindestens einen ersten Antenne umfasst oder die mindestens eine erste Antenne und die mindestens eine zweite Antenne dieselbe mindestens eine Antenne sind.

9. Verfahren nach einem der Ansprüche 1 bis 8, umfassend, in der ersten Zeit-Frequenz-Ressource, das gleichzeitige Übertragen des ersten Kalibrierungssignals von der mindestens einen ersten Antenne und das Bestimmen der ersten Messungen von der mindestens einen zweiten Antenne.

10. Verfahren nach einem der Ansprüche 1 bis 9, wobei das Übertragen des ersten Kalibrierungssignals von mindestens einer ersten Antenne der Vielzahl von Antennen in der ersten Zeit-Frequenz-Ressource das gleichzeitige Übertragen eines jeweiligen ersten Kalibrierungssignals von jeder einer Vielzahl von ersten Antennen in der ersten Zeit-Frequenz-Ressource umfasst.

11. Verfahren nach Anspruch 10, wobei das gleichzeitige Übertragen des jeweiligen ersten Kalibrierungssignals von jeder der Vielzahl von ersten Antennen in der ersten Zeit-Frequenz-Ressource das Übertragen desselben ersten Kalibrierungssignals umfasst, das mit einem jeweiligen komplexen Gewichtungsfaktor von jeder der Vielzahl von ersten Antennen gewichtet ist.

12. Verfahren nach einem der Ansprüche 1 bis 11, wobei die Kalibrierungsparameter für die Drahtloskommunikationsvorrichtung für jede Antenne einen oder mehrere Werte umfassen, die auf einem Verhältnis einer komplexen Verstärkung einer Übertragungseinrichtung, die mit der Antenne verbunden ist, zu einer komplexen Verstärkung einer Empfangseinrichtung basieren, die mit der Antenne verbunden ist, oder die auf einem Verhältnis der komplexen Verstärkung der Empfangseinrichtung, die mit der Antenne verbunden ist, zu der komplexen Verstärkung der Übertragungsvorrichtung basieren, die mit der Antenne verbunden ist.

13. Verfahren nach einem der Ansprüche 1 bis 12, wobei die Kalibrierungsparameter für die Drahtloskommunikationsvorrichtung mindestens einige Elemente einer Kalibrierungsmatrix C umfassen.

14. Computerprogramm, umfassend Anweisungen, die, wenn sie auf mindestens einem Prozessor ausgeführt werden, den mindestens einen Prozessor veranlassen, ein Verfahren nach einem der Ansprüche 1 bis 13 vorzunehmen.

15. Einrichtung zum Kalibrieren einer Drahtloskommunikationsvorrichtung, die eine Vielzahl von Antennen aufweist, die Einrichtung umfassend einen Prozessor und einen Speicher, wobei der Speicher Anweisungen enthält, die durch den Prozessor derart ausführbar sind, dass die Einrichtung betriebsfähig ist zum:

Übertragen eines ersten Kalibrierungssignals von mindestens einer ersten Antenne der Vielzahl von Antennen in einer ersten Zeit-Frequenz-Ressource;
Bestimmen von ersten Messungen des ersten Kalibrierungssignals in der ersten Zeit-Frequenz-Ressource von mindestens einer zweiten Antenne der Vielzahl von Antennen, wobei die mindestens eine zweite Antenne mindestens eine der mindestens einen ersten Antenne einschließt;
Übertragen eines zweiten Kalibrierungssignals von mindestens einer dritten Antenne der Vielzahl von Antennen in einer zweiten Zeit-Frequenz-Ressource;
Bestimmen von zweiten Messungen des zweiten Kalibrierungssignals in der zweiten Zeit-Frequenz-Ressource von mindestens einer vierten Antenne der Vielzahl von Antennen, wobei die mindestens eine dritte Antenne mindestens eine der mindestens einen vierten Antenne einschließt;
Bestimmen von Kalibrierungsparametern für die Drahtloskommunikationsvorrichtung basierend auf den ersten Messungen und den zweiten Messungen.

**Revendications**

1. Procédé d'étalonnage d'un dispositif de communication sans fil ayant une pluralité d'antennes, le procédé comprenant :

la transmission (302) d'un premier signal d'étalonnage à partir d'au moins une première antenne de la pluralité d'antennes dans une première ressource temps-fréquence ;
la détermination (304) de premières mesures du premier signal d'étalonnage dans la première ressource temps-fréquence à partir d'au moins une deuxième antenne de la pluralité d'antennes, dans lequel l'au moins une deuxième antenne comporte au moins l'une parmi l'au moins une première antenne ;
la transmission (306) d'un second signal d'étalonnage à partir d'au moins une troisième antenne de la pluralité d'antennes dans une seconde ressource temps-fréquence ;
la détermination (308) de secondes mesures du second signal d'étalonnage dans la seconde ressource temps-fréquence à partir d'au moins une quatrième antenne de la pluralité d'antennes, dans lequel l'au moins une troisième antenne comporte au moins l'une parmi l'au moins une quatrième antenne ; et
la détermination (310) de paramètres d'étalonnage pour le dispositif de communication sans fil sur la base des premières mesures et des secondes mesures.

2. Procédé selon la revendication 1, comprenant le fait de s'abstenir de transmettre à partir de l'au moins une quatrième antenne autre que l'au moins une troisième antenne dans la première ressource temps-fréquence.

3. Procédé selon la revendication 1 ou 2, dans lequel l'au moins une quatrième antenne comprend la totalité de l'au moins une troisième antenne, ou l'au moins une troisième antenne et l'au moins une quatrième antenne sont la même au moins une antenne.

4. Procédé selon l'une quelconque des revendications 1 à 3, comprenant, dans la seconde ressource temps-fréquence, la transmission simultanée du second signal d'étalonnage à partir de l'au moins une troisième antenne et la détermination des secondes mesures à partir de l'au moins une quatrième antenne.

5. Procédé selon l'une quelconque des revendications 1 à 4, dans lequel la transmission du second signal d'étalonnage à partir d'au moins une troisième antenne de la pluralité d'antennes dans la seconde ressource temps-fréquence comprend la transmission simultanée d'un second signal d'étalonnage respectif à partir de chacune d'une pluralité de troisièmes antennes dans la seconde ressource temps-fréquence.

6. Procédé selon la revendication 5, dans lequel la transmission simultanée du second signal d'étalonnage respectif à partir de chacune de la pluralité de troisièmes antennes dans la seconde ressource temps-fréquence comprend la transmission du même second signal d'étalonnage à partir de chacune de la pluralité de troisièmes antennes pondérée par un facteur de pondération complexe respectif.

7. Procédé selon l'une quelconque des revendications 1 à 6, comprenant le fait de s'abstenir de transmettre à partir de l'au moins une deuxième antenne autre que l'au moins une première antenne dans la première ressource temps-fréquence.

8. Procédé selon l'une quelconque des revendications 1 à 7, dans lequel l'au moins une deuxième antenne comprend la totalité de l'au moins une première antenne, ou l'au moins une première antenne et l'au moins une deuxième antenne sont les mêmes au moins une antenne.

9. Procédé selon l'une quelconque des revendications 1 à 8, comprenant, dans la première ressource temps-fréquence, la transmission simultanée du premier signal d'étalonnage à partir de l'au moins une première antenne et la détermination des premières mesures à partir de l'au moins une deuxième antenne.

10. Procédé selon l'une quelconque des revendications 1 à 9, dans lequel la transmission du premier signal d'étalonnage à partir d'au moins une première antenne de la pluralité d'antennes dans la première ressource temps-fréquence comprend la transmission simultanée d'un premier signal d'étalonnage respectif à partir de chacune d'une pluralité de premières antennes dans la première ressource temps-fréquence.

11. Procédé selon la revendication 10, dans lequel la transmission simultanée du premier signal d'étalonnage respectif à partir de chacune de la pluralité de premières antennes dans la première ressource temps-fréquence comprend la transmission du même premier signal d'étalonnage pondéré par un facteur de pondération complexe respectif à partir de chacune de la pluralité de premières antennes.

12. Procédé selon l'une quelconque des revendications 1 à 11, dans lequel les paramètres d'étalonnage pour le dispositif de communication sans fil comprennent, pour chaque antenne, une ou plusieurs valeurs basées sur un rapport entre un gain complexe d'appareil de transmission associé à l'antenne et un gain complexe d'appareil de réception associé à l'antenne, ou sur la base d'un rapport entre le gain complexe de l'appareil de réception associé à l'antenne et le gain complexe de l'appareil de transmission associé à l'antenne.

13. Procédé selon l'une quelconque des revendications 1 à 12, dans lequel les paramètres d'étalonnage pour le dispositif de communication sans fil comprennent au moins certains éléments d'une matrice d'étalonnage C.

14. Programme informatique, comprenant des instructions qui, lorsqu'elles sont exécutées sur au moins un processeur, amènent l'au moins un processeur à effectuer un procédé selon l'une quelconque des revendications 1 à 13.

15. Appareil d'étalonnage d'un dispositif de communication sans fil ayant une pluralité d'antennes, l'appareil comprenant un processeur et une mémoire, la mémoire contenant des instructions exécutables par le processeur de telle sorte que l'appareil peut fonctionner pour :

transmettre un premier signal d'étalonnage à partir d'au moins une première antenne de la pluralité d'antennes dans une première ressource temps-fréquence ;
déterminer de premières mesures du premier signal d'étalonnage dans la première ressource temps-fréquence à partir d'au moins une deuxième antenne de la pluralité d'antennes, dans lequel l'au moins une deuxième antenne comporte au moins l'une parmi l'au moins une première antenne ;
transmettre un second signal d'étalonnage à partir d'au moins une troisième antenne de la pluralité d'antennes dans une seconde ressource temps-fréquence ;
déterminer de secondes mesures du second signal d'étalonnage dans la seconde ressource temps-fréquence à partir d'au moins une quatrième antenne de la pluralité d'antennes, dans lequel l'au moins une troisième antenne comporte au moins l'une parmi l'au moins une quatrième antenne ;
déterminer des paramètres d'étalonnage pour le dispositif de communication sans fil sur la base des premières mesures et des secondes mesures.

Transmitting a first calibration signal from at least one first antenna of a plurality of antennas in a first time-frequency resource ⟋102

Determining first measurements of the first calibration signal in the first time-frequency resource from at least one second antenna of the plurality of antennas, wherein the at least one second antenna includes at least one of the at least one first antenna ⟋104

Determining calibration parameters for the wireless communication device based on the first measurements ⟋106

<u>100</u>

# FIG. 1

Transmitter chain 1 ⟋204

Receiver chain 1 ⟋202

⟋208

⟋206

Transmitter chain N ⟋204

Receiver chain N ⟋202

⟋208

⟋206

<u>200</u>

# FIG. 2

Transmitting a first calibration signal from at least one first antenna of the plurality of antennas in a first time-frequency resource ⌐⌐302

Determining first measurements of the first calibration signal in the first time-frequency resource from at least one antenna of the plurality of antennas other than the at least one first antenna ⌐⌐304

Transmitting a second calibration signal from at least one second antenna of the plurality of antennas in a second time-frequency resource, wherein the at least one second antenna includes at least one of the at least one first antenna, and wherein the at least one second antenna includes at least one antenna of the plurality of antennas other than the at least one first antenna ⌐⌐306

Determining second measurements of the second calibration signal in the second time-frequency resource from at least one antenna of the plurality of antennas other than the at least one second antenna ⌐⌐308

Determining calibration parameters for the wireless communication device based on the first measurements and the second measurements ⌐⌐310

300

FIG. 3

Interface — 406

400

Processing circuitry — 402

Memory — 404

Computer program code — 410

**FIG. 4**

Interface — 506

500

Processing circuitry — 502

Memory — 504

Computer program code — 510

**FIG. 5**

FIG. 6

**FIG. 7**

**FIG. 8**

**FIG. 9**

**FIG. 10**

Flowchart FIG. 9:

BEGIN

*3410*
Host computer provides user data

*3411*
Host computer executes host application

*3420*
Host computer initiates transmission carrying the user data to the UE

*3430*
Base station transmits the user data

*3440*
UE executes client application

END

Flowchart FIG. 10:

BEGIN

*3510*
Host computer provides user data

*3520*
Host computer initiates transmission carrying the user data to the UE

*3530*
UE receives the user data

END

BEGIN

**3610**
UE receives input data provided at host computer ⟷ **3611** UE executes client application

**3620**
UE provides user data ⟷ **3621** UE executes client application

**3630**
UE initiates transmission of the user data to the host computer

**3640**
Host computer receives user data transmitted from the UE

END

**FIG. 11**

BEGIN

**3710**
Base station receives user data from UE

**3720**
Base station initiates transmission of user data to the host computer

**3730**
Host computer receives the user data

END

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 101013425 A

- WO 2021121538 A1

**Non-patent literature cited in the description**

- **J. VIEIRA et al.** Reciprocity calibration for massive MIMO: Proposal, modeling and validation. *IEEE Trans. Wireless Commun.*, May 2017, vol. 16 (5), 3042-3056